# EUROPÄISCHE PATENTSCHRIFT

(11) **EP 1 218 134 B1**
(45) Veröffentlichungstag und Bekanntmachung des Hinweises auf die Patenterteilung: **17.03.2004**
(21) Anmeldenummer: 00962521.1
(22) Anmeldetag: 22.09.2000
(51) Int. Cl.: B23B 29/03, B23D 77/04, B23Q 1/34

(54) **FEINSTBOHRWERKZEUG MIT PIEZOELEKTRISCH VERSTELLBAREM SCHNEIDELEMENT**
SUPERFINISH BORING TOOL COMPRISING A PIEZOELECTRICALLY ADJUSTABLE CUTTING ELEMENT
OUTIL DE PERCAGE DE SUPERFINITION COMPORTANT UN ELEMENT COUPANT A REGLAGE PIEZOELECTRIQUE

(30) Priorität: 22.09.1999 DE 19945455
(43) Veröffentlichungstag der Anmeldung: 03.07.2002
(73) Patentinhaber: Gühring, Jörg, Dr., 72458 Albstadt (DE)
(72) Erfinder: CSELLE, Tibor, 2540 Grenchen (CH)
(74) Vertreter: Winter, Konrad Theodor, Dipl.-Ing.
(86) Internationale Anmeldenummer: PCT/EP2000/009308
(87) Internationale Veröffentlichungsnummer: WO 2001/021350

(56) Entgegenhaltungen:
- DE-A- 1 652 790
- DE-A- 19 640 280
- DE-B- 1 552 311
- DE-C- 669 105
- US-A- 3 246 545
- US-A- 5 174 695

## Beschreibung

Die vorliegende Erfindung betrifft ein Feinstbohrwerkzeug mit einem an einem Werkzeughalter piezoelektrisch verstellbar montierten Schneidelement.

Piezoelemente bzw. piezoelektrische Kristalle weisen bekanntlich eine hohe Eigensteifigkeit auf, sind kommerziell käuflich und darüber hinaus äußerst robust. Sie finden daher in jüngster Zeit zunehmend Anwendung in elektromechanischen Systemen zur Einstellung von Werkzeugschneiden z.B. von Feinstbohrwerkzeugen. Ein Werkzeug mit einem derartigen piezoelektrischen Werkzeugschneideneinstellsystem benötigt keine empfindlichen, mechanischen Miniaturbauteile, wie z.B. kleine Einstellschrauben, die von der das Werkzeug einstellenden Person eine besondere Fingerfertigkeit abverlangen. Die Einstellung kann vielmehr mittels einer einfachen elektronischen Einstellvorrichtung über eine digitale Tastatur vorgenommen werden.

So wird beispielsweise in der deutschen Offenlegungsschrift DE-3509240 eine Antriebseinrichtung für Werkzeugschneiden beschrieben, die einen piezoelektrischen Kristall umfaßt, der sich an seiner einen Seite an einem an einer Werkzeugmaschine vorgesehenen Widerlager abstützt und der an seiner anderen Seite über eine Halterung mit einer Werkzeugschneide in Verbindung steht. Bei Anlegen einer elektrischen Spannung an den piezoelektrischen Kristall wird durch dessen Elektrostriktion, d.h. dessen elastische Deformation in dem durch die elektrische Spannung geschaffenen elektrischen Feld, eine Änderung des Abstandes zwischen der Werkzeugschneide und dem Widerlager erzeugt.

Aus dem US Patent Nr. 5,174,695 ist eine Feinstbohrmaschine bekannt, an deren Arbeitsspindel eine Bohrstange auswechselbar montiert ist. An einem mit der Bohrstange, z.B. durch Elektroerosion, einstückig ausgebildeten Werkzeughalter ist ein Drehwerkzeug befestigt. Der Werkzeughalter ist im Besonderen in der Weise an den Werkzeughalter angelenkt, daß er infolge einer in Bezug auf die Drehachse der Bohrstange axial wirkenden Antriebskraft eine radial orientierte Auslenkung erfährt. Die radial orientierte Auslenkung des Werkzeughalters entspricht einer radialen Verstellung des am Werkzeughalter befestigten Drehwerkzeugs. Die Beaufschlagung des Werkzeughalters mit der axialen Antriebskraft, woraus dessen radial orientierte Auslenkung resultiert, erfolgt durch Anlegen einer elektrischen Spannung an einen in der Arbeitsspindel angeordneten piezoelektrischen Servomotor, der über ein Verbindungsgestänge mit dem Werkzeughalter in Verbindung steht.

Schließlich beschreibt die deutsche Offenlegungsschrift DE-4401496 eine Werkzeugschneiden-Verstelleinrichtung, bei der ebenfalls mittels eines Piezo-Translators in Axialrichtung eines Werkzeugschafts eine Kraft erzeugt wird, die über einen Werkzeughalter, der zwischen dem PiezoTranslator und einer Werkzeugschneide angeordnet und mit dem Werkzeugschaft in Form eines Gelenkmechanismus einstükkig ausgebildet ist, in eine die Werkzeugschneide beaufschlagende, radial orientierte Kraft umgewandelt wird.

Zur Herstellung zylinderischer Innen- oder Außenkonturen ist es im Fall der vorstehend genannten Werkzeugsysteme mit piezoelektrischen Werkzeugschneideneinstellmechanismen erforderlich, daß das auf den piezoelektrischen Antrieb wirkende elektrische Feld während des Betriebs des Werkzeugs konstant gehalten wird. Hierzu muß die am piezoelektrischen Antrieb angelegte elektrische Spannung während des Betriebs des Werkzeugs konstant gehalten wird. Während die Spannungsversorgung bei stillstehenden Werkzeugen, wie z.B. einem Drehwerkzeug, relativ einfach, z.B. über eine Steckverbindung, zu bewerkstelligen ist, kann die Spannungsversorgung bei Werkzeugen, die für einen Rotationsbetrieb konzipiert sind, jedoch zu einem Problem bzw. aufgrund der Tatsache, daß hierzu eine kabellose Spannungseinspeisung erforderlich wäre, zu erhöhten Herstellungskosten führen.

Darüber hinaus könnte sich das an den piezoelektrischen Antrieb angelegte elektrische Feld, das eigentlich konstant bleiben sollte, unter dem Einfluß äußerer magnetischer oder elektrischen Störfelder ungewollt ändern, was wiederum eine Änderung der Werkzeugschneideneinstellung zur Folge hätte. Diese Gefahr kann sich insbesondere im Fall von speziell für einen Rotationsbetrieb konzipierten Werkzeugen, wie z.B. Feinstbohrwerkzeugen, aufgrund der Tatsache, daß der piezoelektrische Antrieb und damit das an den piezoelektrischen Antrieb angelegte elektrische Feld ebenfalls in Rotation versetzt werden, einstellen.

Aus der DE 1552311 B ist ein Feinstbohrwerkzeug gemäß den Oberbegriffen der Ansprüche 1 und 3 bekannt.

Der vorliegenden Erfindung liegt die Aufgabe zugrunde, ein Feinstbohrwerkzeug mit einem piezoelektrisch verstellbar montierten Schneidwerkzeug so weiterzuentwickeln, daß eine einmal durchgeführte piezoelektrische Schneidwerkzeugeinstellung während des Betriebs des Bohrwerkzeugs ohne großen technischen Aufwand zuverlässig eingehalten werden kann.

Diese Aufgabe wird durch das Feinstbohrwerkzeug gemäß den Merkmalen des Patentanspruchs 1 oder 3 gelöst. Vorteilhafte Weiterentwicklungen sind Gegenstand der Unteransprüche.

Das erfindungsgemäße Feinstbohrwerkzeug hat einen Arretiermechanismus aus, der eine mechanische Arretierung des wenigstens einen piezoelektrisch eingestellten Schneidelements in einer bestimmten Relativposition zur Bohrstange erlaubt.

Nach dem Patentanspruch 1 ist der Arretiermechanismus in die Bohrstange integriert und umfaßt einen Klemmkörper mit zwei, das Verstellelement im wesentlichen vollständig umgreifenden Klemmflügeln sowie eine die Klemmflügel des Klemmkörpers durchsetzende Klemmschraube zum Zusammenspannen der Klemmflügel umfassen, wodurch sich der Klemmkörper und damit die Bohrstange am Verstellelement fixieren lassen. In diesem Fall ist es von Vorteil, wenn der Klemmkörper, in Axialrichtung betrachtet, einen in engen Grenzen elastisch verformbaren Abschnitt aufweist, der für einen Ausgleich von radialen und axialen Verlagerungen sorgt, die sich durch Belastungen während des Zerspanungsprozesses im Betrieb des Bohrwerkzeugs ergeben.

Nach dem Patentanspruch 3 ist das Schneidelement in einer in den Außenumfang der Bohrstange mündenden Ausnehmung, d.h. zwischen zwei seitlichen Ausnehmungsflanken, radial verschiebbar aufgenommen; der Arretiermechanismus umfaßt einen relativ zur Bohrstange bewegbaren Klemmkörper, der eine der beiden, die Ausnehmung bildenden seitlichen Flanken der Ausnehmung definiert.

Durch den Arretiermechanismus kann das wenigstens eine Schneidelement somit in-einer bestimmten Relativposition zur Bohrstange mechanisch und damit unabhängig von der Spannungsversorgung des piezoelektrischen Aktors oder äußeren Störfeldern zuverlässig gehalten werden. Durch diese konstruktiv einfachen Maßnahmen kann daher eine einmal auf piezoelektrischem Weg durchgeführte Schneidelementeinstellung unabhängig von der Spannungsversorgung eines piezoelektrischen Aktors und unabhängig von äußeren Störeinflüssen zuverlässig und in einfacher Weise gesichert werden.

In einer bevorzugten Ausgestaltung umfaßt der Haltemechanismus ein in Wirkverbindung zwischen dem piezoelektrischen Aktor und dem wenigstens einen Schneidelement in Axialrichtung der Bohrstange verstellbar angeordnetes Verstellelement. Die Kraftbeaufschlagung des Schneidelements zum Zweck dessen Verstellung relativ zur Bohrstange erfolgt somit über das Verstellelment. Das Verstellelement kann wiederum über ein in Wirkverbindung zwischengeschaltetes Getriebe mit dem Schneidelement in Verbindung stehen. Das Getriebe hat dabei die Funktion die Axialbewegung des Verstellelements, vorzugsweise mit Kraftübersetzung, in eine bestimmte Axial- und/oder Radialbewegung des Schneidelements relativ zur Bohrstange umzuwandeln.

In Anwendung des erfindungsgemäßen Bohrwerkzeugs zur Feinbearbeitung von Bohrungsoberflächen kann das wenigstens eine Schneidelement an der Bohrstange radial verstellbar angeordnet sein. In diesem Fall hat es sich bewährt, wenn das Getriebe ein Keilgetriebe ist, das eine am Verstellelement vorgesehene Keilfläche umfaßt, die mit dem Schneidelement in Wirkverbindung steht. Des Weiteren wird in diesem Fall das wenigstens eine Schneidelement vorteilhafterweise von einem Spreizring als ein Bestandteil des Keilgetriebes getragen. Der Spreizring weist ferner vorzugsweise eine der Keilfläche des Verstellelements zugeordnete Keilfläche auf.

In einer weiteren Ausgestaltung umfaßt das Feinstbohrwerkzeug einen am freien Ende der Bohrstange auf Seiten des Schneidelements justierbar vorgesehenen Anschlagmechanismus, der die Funktion hat, die axiale Endposition des Verstellelements und/oder des Schneidelements festzulegen.

Der piezoelektrische Aktor ist vorzugsweise in einem an das Ende der Bohrstange auf Seiten des Arretiermechanismus axial angeflanschten Gehäuse aufgenommen, wodurch einerseits ein Werkzeugsystem gebildet wird, das eine sich durch eine bestimmte Ausrichtung zum Feinstbohrwerkzeug auszeichnende definierte Anflanschung des Piezo-Aktors an das Feinstbohrwerkzeug und damit eine äußersr präzise Werkzeugschneideneinstellung gestattet, und andererseits den Piezo-Aktor vor äußeren Beschädigungen bewahrt. Der piezoelektrische Aktor ist vorzugsweise ferner zwischen kugelschalenförmigen Lagern in dem Gehäuse angeordnet, damit radiale Verspannung den Piezo-Aktor nicht beschädigen.

Diese Ausgestaltung bietet somit die Möglichkeit, den Piezo-Aktor nicht nur zum Zweck der Einstellung der Werkzeugschneiden an das Feinstbohrwerkzeug anzuflanschen, sondern das Feinstbohrwerkzeug einschließlich des angeflanschten Piezo-Aktors als eine Einheit zu verwenden., die auch während des Betriebs des Bohrwerkzeugs bestehen bleibt. Z.B. könnte diese Einheit über ein entsprechend konstruiertes Gehäuse des Piezo-Aktors an eine Werkzeugmaschinenspindel angekoppelt werden. Speziell in diesem Fall ist es im Hinblick auf eine einfache und problemlos Spannungsversorgung des Piezo-Aktors von Vorteil, wenn am Gehäuse ein rotationssymmetrisches Anschlußelement zum Versorgen des Piezo-Aktors mit elektrischer Spannung vorgesehen ist.

Hinsichtlich des bevorzugten Anwendungsgebiets des erfindungsgemäßen Bohrwerkzeugs zur Fein- oder Feinstbearbeitung von Bohrungsoberflächen, wobei es im Hinblick auf die zu erzielende hohe Maß-, Form- und Lagegenauigkeit, Oberflächengüte und Oberflächenbeschaffenheit der zu bearbeitenden Bohrung auf eine- äußerst präzise Einstellung des Schneidelements, z.B. einer PKD-, CBN-, VHM- oder HM-Schneidplatte, ankommt, hat der piezoelektrische Aktor vorzugsweise einen Verstellbereich von bis zu 100 µm bei einer Auflösung von kleiner als 0,1 µm und einer Belastbarkeit von mehr als 500 N.

Unter Bezugnahme auf die beigefügten Zeichnungen erfolgt nun die Beschreibung des erfindungsgemäßen Bohrwerkzeugs an drei bevorzugten Ausführungsformen. In den Zeichnungen zeigt/zeigen:
Fig. 1 einen Längsschnitt durch ein erfindungsgemäßes Feinstbohrwerkzeug gemäß einer ersten Ausführungsform;
Fig. 2 einen Längsschnitt durch- ein erfindungsgemäßes Feinstbohrwerkzeug gemäß einer zweiten Ausführungsform;
die Figuren 3a, 3b und 3c einen Längsschnitt, einen Querschnitt entlang der Linie 3b-3b von Fig. 3a sowie eine Einzelheit X aus Fig. 3a eines erfindungsgemäßen Feinstbohrwerkzeugs gemäß einer dritten Ausführungsform; und
die Figuren 4a, 4b, 4c, 4d und 4e verschiedene Abwandlungen bezüglich des erfindungsgemäßen Feinstbohrkwerzeugs gemäß der ersten bis dritten Ausführungsform.

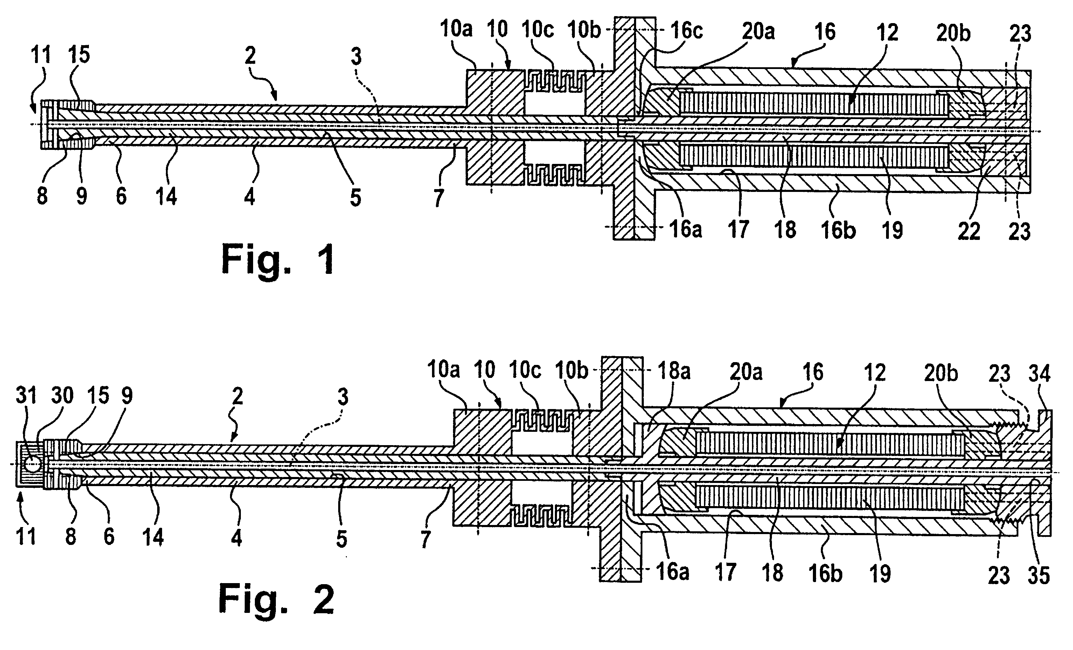

Fig. 1 zeigt eine schematische Ansicht des erfindungsgemäßen Feinstbohrwerkzeugs 2 gemäß einer ersten Ausführungsform. Das Feinstbohrwerkzeug 2 umfaßt als seine wesentlichen Bestandteile eine Bohrstange 4, ein Schneidteil 8, einen Arretiermechanismus 10, einen Piezo-Aktor 12 sowie ein Verstellelement 14.

In Fig. 1 ist erkennbar, daß die Bohrstange 4 in Axialrichtung, d.h. in Richtung der Drehachse 3 des Bohrwerkzeugs 2, durchgängig im wesentlichen zylindrisch ausgebildet ist. Im zylindrischen Innenraum 5 der Bohrstange 4 ist das Verstellelement 14 in der Weise angeordnet, daß es relativ zur Bohrstange 4 verschoben werden kann. Das Verstellelement 14 ist in dieser Ausführungsform ebenfalls zylindrisch, d.h. rohrförmig, ausgebildet und steht in Wirkverbindung mit dem nachstehend näher zu beschreibenden Schneidteil 8 sowie dem nicht näher beschriebenen Piezo-Aktor 12.

An dem gemäß Fig. 1 linken Ende 6 der Bohrstange 4 ist das Schneidteil 8 in geeigneter Art und Weise angeordnet. Das Schneidteil 8 ist in dieser Ausführungsform als ein Spreizring ausgebildet. Der als Spreizring ausgebildete Schneidteil 8 weist im Besonderen zwei (nicht näher gezeigte) Spreizflügel auf, die sich beispielsweise durch einen im wesentlichen in Richtung der Drehachse 3 des Bohrwerkzeugs 2 verlaufenden Axialschlitz, der sich von der Bohrstange 4 ausgehend über nahezu die gesamte axiale Länge des Schneidteils 8 erstreckt, sowie einen an den Axialschlitz anschließenden Querschlitz realisieren lassen. Am Außenumfang des Abschnitts des Schneidteils 8, an dem die beiden Spreizflügel ausgebildet sind, sind ein oder mehrere (in Fig. 1 nicht näher gezeigte) Schneidelemente, z.B. PKDoder HM-Schneidplatten, in bekannter Art und Weise befestigt.

In Fig. 1 ist des Weiteren erkennbar, daß der Schneidteil 8 einen Innenkonus 9 aufweist, der mit einem Außenkonus 15, der an dem dem Schneidteil 8 zugewandten Ende des Verstellelements 14 einstückig ausgebildet ist, ein Keilgetriebe bildet. In dieser Ausführungsform nehmen der Außendurchmesser des Außenkonus 15 wie auch der Innendurchmesser des Innenkonus 9 zur Bohrwerkzeugspitze 11 hin zu. Des Wieitereh hat eine Verschiebung des Verstellelements 14 relativ zur Bohrstange 4 in Fig. 1 nach rechts, durch Aufbringung einer bestimmten Axialkraft mittels des nachstehend näher zu beschreibenden Piezo-Aktors, zur Folge, daß der Außenkonus 15 des Verstellelements 14 am Innenkonus 9 des sich an der Bohrstange 4 abstützenden Schneidteils 8 aufläuft, wodurch der als Spreizring ausgebildete Schneidteil 8, im Besonderen der Abschnitt des Schneidteils 8, an dem die beiden Spreizflügel ausgebildet sind, radial aufgeweitet wird. Auf diese Weise läßt sich somit unter einer mit der radialen Aufweitung des Schneidteils 8 einhergehenden elastischen Verformung des Schneidteils 8 eine Verstellung der am Schneidteil 8 befestigten Schneidelemente radial nach außen bewerkstelligen. Je nach Konzipierung des aus dem Innenkonus 9 und dem Außenkonus 15 gebildeten Keilgetriebes läßt sich somit eine gewünschte Kraftübersetzung vornehmen. Das Schneidteil 8 weist natürlich eine für die Radialverstellung der Schneidelemente erforderliche Elastizität auf, so daß bei einem Abfall oder Wegfall der auf das Verstellelement aufgebrachten Axialkraft das Schneidteil tendentiell bestrebt ist, wieder seinen Ausgangszustand einzunehmen.

Um eine einmal durchgeführte Radialverstellung der Schneidelemente festzuhalten oder zu sichern, d.h. quasi "einzufrieren", weist das erfindungsgemäße Feinstbohrwerkzeug den an dem in Fig. 1 linken Ende 7 der Bohrstange 4 vorgesehenen Arretiermechanismus 10 zum Fixieren des Verstellelements in einer bestimmten axialen Relativposition zur Bohrstange 4 auf. In dieser Ausführungsform ist der Arretiermechanismus 10 einstückig mit der Bohrstange 4 ausgebildet und besteht im wesentlichen aus zwei Klemmabschnitten 10a und 10b sowie einem zwischen den Klemmabschnitten 10a und 10b angeordneten, in engen Grenzen elastisch verformbaren Abschnitt 10c. Ähnlich zu dem als Spreizring ausgebildeten Schneidteil 8 weisen die beiden Klemmabschnitte 10a und 10b in dieser Ausführungsform jeweils zwei (nicht näher gezeigte) Klemmflügel auf, die das in der Bohrstange 4 aufgenommene Verstellelement 14 im wesentlichen vollständig umgreifen, sowie jeweils eine die Klemmflügel durchsetzende (in Fig. 1 durch eine strichpunktierte Linie angedeutete) Klemmschraube zum Zusammenspannen der jeweiligen Klemmflügel. Durch das Zusammenspannen der Klemmflügel beim Anziehen der Klemmschrauben wird der Klemmkörper an das Verstellelement geklemmt, wodurch das Verstellelement relativ zur Bohrstange fixiert wird. Der in engen Grenzen elastisch verformbare Abschnitt 10c des Klemmkörpers 10 sorgt für einen Ausgleich von radialen und axialen Verlagerungen, die sich während des Zerspanungsprozesses im Betrieb des Bohrwerkzeugs ergeben können.

In Fig. 1 ist darüber hinaus erkennbar, daß an dem dem Schneidteil 8 abgewandten freien Ende des Klemmkörpers 10, d.h. an dem in Fig. 1 rechten Ende des Klemmabschnitts 10b, z.B. mittels (in Fig. 1 strichpunktiert angedeuteten) Schrauben ein Piezo-Aktor 12 koaxial an das Feinstbohrwerkzeug 2 angeflanscht ist. Der Piezo-Aktor 12 umfaßt ein oder mehrere parallel und/oder in Reihe geschaltete Piezoelemente 19 bzw. Piezo-Kristalle, die in einem Gehäuse 16 untergebracht sind. Das Gehäuse 16 ist in Form eines Hohlzylinders ausgebildet, der eine Bodenwandung 16a an seiner in Fig. 1 linken Seite sowie eine Umfangswandung 16b aufweist und an seiner in Fig. 1 rechten Seite durch einen relativ zum Gehäuse 16 verschiebar geführten Spannring 22 verschlossen ist. In der Bodenwandung 16a ist eine Bohrung 16c vorgesehen, durch welche sich entweder das aus dem Feinstbohrwerkzeug 2 ragende Verstellelement 14 oder ein koaxial an das Verstellelement 14, z.B. über eine Schraubverbindung, gekoppeltes Verlängerungselement 18 erstreckt. Das Verlängerungselement 18 erstreckt sich ferner durch das Gehäuse 16 des Piezo-Aktors 12.

Die im Gehäuse 16 untergebrachten Piezoelemente 19 sind zwischen zwei ringartig ausgebildeten Lagerschalen 20a und 20b, die zugleich das Verlängerungselement 18 führen, zwischen dem Verlängerungselement 18 und der Außenwandung 16b des Gehäuses 16 fest angeordnet. Die Lagerschalen 20a und 20b sind im Besonderen, wie dies in Fig. 1 erkennbar ist, kugelschalenförmig ausgebildet, um zu verhindern, daß radiale Verspannungen die Piezoelemente 19 beschädigen. Die Lagerschalen 20a und 20b sind ferner im Gehäuse 18 mit einem radialen Spiel aufgenommen. Die in Fig. 1 linke Lagerschale 20a stützt sich an der Bodenwandung 16a des Gehäuses 16 ab und erlaubt eine Relativverschiebung des Verlängerungselements 18. Die in Fig. 1 rechte Lagerschale 20b stützt sich an dem Spannring 22 ab, der wiederum in geeigneter Weise mit dem Verlängerungselement 18 in fester Verbindung steht, z.B. auf das Verlängerungselement 18 gepreßt oder geschraubt ist, oder, wie in Fig. 1 strichpunktiert angedeutet, mittels einer Schraube am Verlängerungselement 18 befestigt ist.

Durch Anlegen einer elektrischen Spannung in eine bestimmte Richtung bzw. mit einer bestimmten Polarität an den Piezo-Aktor 12, d.h. an die Piezo-Elemente 19 des Piezo-Aktors 12 (d.h. abhängig von der Höhe, der jeweils an den Piezo-Aktor anliegenden Potentiale), wird eine Axialkraft in Fig. 1 nach rechts erzeugt, die über den Spannring 22 und das Verlängerungselement 18 als eine Zugkraft auf das Verstellelement 19 übertragen wird. In Abhängigkeit davon, ob das Verstellelement 14 durch den Arretiermechanismus 10 relativ zur Bohrstange 4 fixiert wird oder nicht, wird die in Fig. 1 nach rechts orientierte Axialkraft mit einer Kraftübersetzung durch das Keilgetriebe zwischen dem Einstellkegel 14 und dem Schneidteil 8 in eine auf das Schneidteil 8 wirkende Radialkraft umgewandelt, die eine Spreizung des Schneidteils 8 radial nach außen bewirkt, wodurch die am Schneidteil 8 befestigten Schneidelemente radial nach außen verstellt werden. Ohne Fixierung des Verstellelements 14 durch den Arretiermechanismus 10, d.h. im Lösezustand der Klemmabschnitte 10a und 10b, hätte ein Absinken oder Wegfall der an den Piezo-Aktor 12 angelegten Spannung zur Folge, daß das Schneidteil 8 wieder seinen Ruheverformungszustand einnimmt und dadurch die piezoelektrisch bewirkte Radialverstellung der Schneidelemente rückgängig gemacht wird.

Wenngleich es in Fig. 1 nicht gezeigt ist, umfaßt der Piezo-Aktor 12 natürlich einen elektrischen Anschlußstecker zur Einspeisung der elektrischen Spannung zum Zweck der Radialverstellung der Schneidelemente. Mit den Bezugszeichen 23 sind in Fig. 1 strichpunktiert Spannungsanschlüsse angedeutet, die sich durch den Spannring 22 und die in Fig. 1 rechte Lagerschale 20b zu den Piezoelementen 19 hin erstrecken.

Der Piezo-Aktor zeichnet sich durch einen Verstellbe-. reich von bis zu 100 µm bei einer Auflösung (kleinste einstellbare Verstellung) von weniger als 0,1 µm und eine Belastbarkeit von mehr als 500 N aus.

Der Arretiermechanismus 10 gewährleistet somit durch eine Fixierung des Verstellelements 14 in einer bestimmten Relativposition zur Bohrstange 4 des erfindungsgemäßen Bohrwerkzeugs 2 eine konstante Einstellung der am Schneidteil 8 befestigten Schneidelemente, und zwar unabhängig von äußeren Störfeldern oder davon, ob die Spannungsversorgung des Piezo-Aktors 12 aufrechterhalten wird oder abbricht. Durch eine rotationssymmetriche Ausgestaltung des Anschlußsteckers, z.B. in Form eines Schleifrings, bei gelöstem Arretiermechanismus, d.h. relativ zur Bohrstange 4 verschiebbarem Verstellelement 14, wäre es auch möglich, während des Rotationsbetriebs des Bohrwerkzeugs 2 die Spannungsversorgung des Piezo-Aktors 12 aufrechtzuerhalten, z.B. um eine nachträgliche Korrektur der Einstellung der Schneidelemente vorzunehmen, oder aber die Spannungsversorgung des Piezo-Aktors 12 in Abstimmung mit der Drehzahl des Bohrwerkzeugs 2 während des Betriebs kontinuierlich zu ändern, z.B. um unrunde, z.B. ovale, Bohrungen herzustellen.

Im folgenden wird nun das Funktionsprinzip des erfindungsgemäßen Bohrwerkzeugs gemäß der ersten Ausführungsform erläutert.

Das erfindungsgemäße Feinstbohrwerkzeug 2 wird in einem nicht dargestellten speziellen Voreinstellgerät auf den geforderten Bohrungsdurchmesser eingestellt. Dabei wird der an das Feinstbohrwerkzeug 2 angeflanschte Piezo-Aktor 12 über den Anschlußstecker im Voreinstellgerät im Ruhezustand elektrisch angesteuert. Hierzu wird nach dem Einlegen des Bohrwerkzeugs 2 in das Voreinstellgerät zunächst die Klemmung des Arretiermechanismus 10 durch die Klemmschrauben in den beiden Klemmabschnitten 10a und 10b gelöst. Danach wird der Piezo-Aktor 12 durch eine stufenlose oder in sehr feinen Stufen einstellbare Steuerspannung auf das gewünschte Maß entsprechend der gewünschten Radialverstellung der Schneidelemente eingestellt, wobei der Piezo-Aktor 2, wie vorstehend erwähnt, über das Verlängerungselement 18, das Verstellelement 14 und das Keilgetriebe das Schneidteil 8 radial aufweitet, wodurch die am Schneidteil 8 befestigten Schneidelemente 8 radial verstellt werden. Mit dem Erreichen der gewünschten Radialeinstellung der Schneidelmente, d.h. des gewünschten Bohrungsdurchmessers, wird die entsprechende elektrische Spannung gehalten und das Verstellelement 14 durch Klemmung mittels des Arretiermechanismus 10 in der entsprechenden Relativposition zur Bohrstange 4 fixiert. Nun wird die an den Piezo-Aktor angelegte elektrische Spannung abgeschaltet. Aufgrund der Fixierung des Verstellelements 14 in einer bestimmten Relativposition zur Bohrstange 4 bleibt jedoch die vorher piezoelektrisch erzielte radiale Einstellung der Schneidelemente erhalten. Nach Abklemmen der elektrischen Leitung vom Piezo-Aktorseitigen Anschlußstecker ist das Feinstbohrwerkzeug einschließlich des angeflanschten Piezo-Aktors 12 als eine Einheit prinzipiell einsatzbereit. Speziell in diesem Fall könnte eine elektrische Ansteuerung des Piezo-Aktors während des Zerspanungsbetriebs denkbar, um bei gelöster Klemmung des Arretiermechanismus eine Schneidelementeeinstellungskorrektur oder -nachregelung vorzunehmen.

Wie vorstehend bereits erwähnt, kann der Piezo-Aktor 12 jedoch auch vom Feinstbohrwerkzeug 2 abgeflanscht werden, um nur das Feinstbohrwerkzeug z.B. über ein nicht dargestelltes Spannsystem an eine ebenfalls nicht dargestellte Werkzeugmaschinenspindel anzukoppeln oder als Bestandteil eines ebenfalls nicht dargestellten, modular aufgebauten Werkzeugsystems zu verwenden.

Gemäß der vorstehend erläuterten ersten Ausführungsform erfolgt eine Verstellung der Schneidelemente radial nach außen somit durch eine Zugbeanspruchung des Verstellelements in Fig. 1 nach rechts. Eine-Radialverstellung der Schneidelemente läßt sich jedoch auch durch eine Druckbeanspruchung des Verstellelements 14 bewerkstelligen, wie dies im folgenden erläutert wird.

Fig. 2 zeigt eine schematische Ansicht des erfindungsgemäßen Bohrwerkzeugs gemäß einer zweiten Ausführungsform, die im wesentlichen eine kinematische Umkehr der ersten Ausführungsform darstellt. Gemäß der zweiten Ausführungsform wird nämlich das Verstellelment 14 relativ zur Bohrstange 4 in Fig. 1 nach links verschoben, d.h. mit einer Druckkraft beaufschlagt, um die am Schneidteil 8 befestigten Schneidelemente 12 radial nach außen zu verstellen.

Der Aufbau des Bohrwerkzeugs 2 gemäß der zweiten Ausfünrungsform entspricht somit bis auf die im folgenden erläuterten Unterschiede im wesentlichen demjenigen des Bohrwerkzeugs 2 gemäß der ersten Ausführungsform, so daß auf eine ausführliche Beschreibung derselben Teile verzichtet wird.

In der zweiten Ausführungsform nehmen der Außendurchmesser des Außenkonus 15 wie auch der Innendurchmesser des Innenkonus 9 zur Bohrwerkzeugspitze 11 hin ab. In dieser Ausführungsform hat eine Verschiebung des Verstellelements 14 relativ zur Bohrstange 4 in Fig. 2 nach links durch Aufbringung einer axialen Druckkraft mittels des Piezo-Aktors 12 zur Folge, daß der Außenkonus 15 des Verstellelements 14 am Innenkonus 9 des sich an einem nachstehend zu beschreibenden Endanschlags 30 abstützenden Schneidteils 8 aufläuft, wodurch der als Spreizring ausgebildete Schneidteil 8, im Besonderen der Abschnitts des Schneidteils 8, an dem die beiden Spreizflügel ausgebildet sind, radial aufgeweitet wird. Ähnlich zur ersten Ausführungsform läßt sich auf diese Weise somit unter einer mit der radialen Aufweitung des Schneidteils 8 einhergehenden elastischen Verformung des Schneidteils 8 eine Radialverstellung der am Schneidteil 8 befestigten Schneidelemente radial nach außen bewerkstelligen.

Da das Verstellelement 14 mittels des nachstehend noch näher zu beschreibenden Piezo-Aktors 12 gemäß der zweiten Ausführungsform mit einer in Fig. 2 nach links orientierten Druckkraft beaufschlagt wird, ist der Endanschlag 30 vorgesehen, der an dem in Fig. 2 linken Ende der Bohrstange 4, d.h. auf Seiten des Schneidteils 8 bzw. an der Bohrwerkzeugspitze 11 mittels eines Spannstifts 31 befestigt ist. Der Endanschlag 30 legt die axiale Position des Schneidteils 8 relativ zur Bohrstange 4 fest.

Abgesehen vom Endanschlag 10 unterscheidet sich das Feinstbohrwerkzeug gemäß der zweiten Ausführungsform von dem gemäß der ersten Ausführungsform in der Lagerung und Anordnung der Piezo-Elemente 19 im Gehäuse 16. Die in Fig. 2 linke Lagerschale 20a stützt sich in der zweiten Ausführungform an einem mit dem Verlängerungselement 18 einstükkig ausgebildeten radialen Flansch 18a ab, wie dies in Fig. 2 erkennbar ist, während sich die in Fig. 2 rechte Lagerschale 20b an einer Vorspannschraube 34 abstützt, die in das Gehäuse 16 eingeschraubt ist und deren offenes Ende verschließt. Das Verlängerungselement 18 ist dabei relativ zur Vorspannschraube 34 verschiebbar in einer axialen Führungsausnehmung 35 aufgenommen. Die Vorspannschraube 34 dient im Besonderen zur Fixierung und Vorspannung des Piezo-Aktors 12. Sie enthält darüber hinaus die Spannungsanschlüsse 23 sowie den nicht gezeigten Anschlusstecker in symmetrischer Anordnung.

Wird an den Piezo-Aktor nun eine elektrische Spannung in eine bestimmte Richtung bzw. mit einer bestimmten Polarität angelegt, so üben die Piezo-Elemente über den radialen Flansch 18a einen Druck in Fig. 2 nach links auf das Verlängerungselement 18 und das Verstellelement 14 aus, wodurch das Verstellelement 14 nach links verschoben wird. Wie in der ersten Ausführungsform läuft der am Verstellelement 14 ausgebildete Außenkonus 15 am Innenkonus 9 auf, der an dem sich am Endanschlag 30 abstützenden Schneidteil 8 vorgesehen ist, auf, wodurch das Schneidteil 8, d.h. der Abschnitt des Schneidteils 8, an dem die Spreizflügel ausgebildet sind, ähnlich zur ersten Ausführungsform radial nach außen aufgeweitet wird.

Der weitere Aufbau des Bohrwerkzeugs gemäß der zweiten Ausführungsform, insbesondere die Ausgestaltung des Arretiermechanismus 10, sowie dessen Funktionsweise entsprechen denjenigen des Bohrwerkzeugs gemäß der ersten Ausführungsform.

Selbstverständlich sind Abwandlungen des gezeigten Systems möglich, ohne den Grundgedanken der in den Patentansprüchen definierten Erfindung zu verlassen.

Beispielsweise könnte anstelle des dreiteilig ausgestalteten Arretiermechanismus mit dem zwischen den beiden Klemmabschnitten 10a und 10b angeordneten elastisch verformbaren Abschnitt 10c, ein Arretiermechanismus verwendet werden, der nur aus einem Klemmabschnitt oder je nach Elastizität bzw. Steifigkeit des aus elastisch verformbaren Abschnitt 10c aus einem der beiden Klemmabschnitte 10a oder 10b sowie dem elastisch verformbaren Abschnitt 10c besteht.

Gemäß den vorstehend beschriebenen Ausführungsformen erfolgt die Arretierung der Schneidelemente in einer bestimmten Relativposition zur Bohrstange 4 durch Klemmung des Verstellelements 14 mittels der Klemmflügel der Klemmabschnitte 10a und 10b des Klemmkörpers. Diese Art und Weise der Arretierung stellt jedoch nur eine Möglichkeit dar. Erfindungsgemäß läßt sich die Arretierung der Schneidelemente in einer bestimmten Relativposition zur Bohrstange 4 auch dadurch realisieren, daß das Schneidteil 8 oder die vom Schneidteil 8 getragenen Schneidelemente selbst arretiert werden, wodurch sich nach einer Unterbrechung der Spannungsversorgung des Piezo-Aktors 12 das Verstellelement 14 "frei" bewegen kann.

Entscheidend ist nur, daß die mittels des Piezo-Aktors 12 erzielte Werkzeugschneideneinstellung auf mechanischem Weg, d.h. durch Klemmung, festgehalten bzw. "eingefroren" wird, was sich, wie vorstehend erwähnt, z.B. dadurch bewerkstelligen läßt, daß das Verstellelement 14 mit Hilfe der Klemmflügel der Klemmabschnitte 10a und 10b geklemmt wird.

Wenngleich gemäß den vorstehenden Ausführungsformen die Schneidelemente ferner von dem Schneidteil 8 getragen werden bzw. an diesem angeordnet sind, ist das erfindungsgemäße Feinstbohrwerkzeug nicht auf diese Ausgestaltung beschränkt. So könnte anstelle des als Spreizring ausgebildeten Schneidteils 8, das einen Bestandteil des Keilgetriebes darstellt, eine andere Ausgestaltung verwendet werden. Darüber hinaus könnten die Schneidelemente auch ohne das Schneidteil 8 in entsprechend konzipierten Führungsausnehmungen an der Bohrstange 4 aufgenommen sein und unmittelbar mit dem Verstellelement 14 in Verbindung stehen.

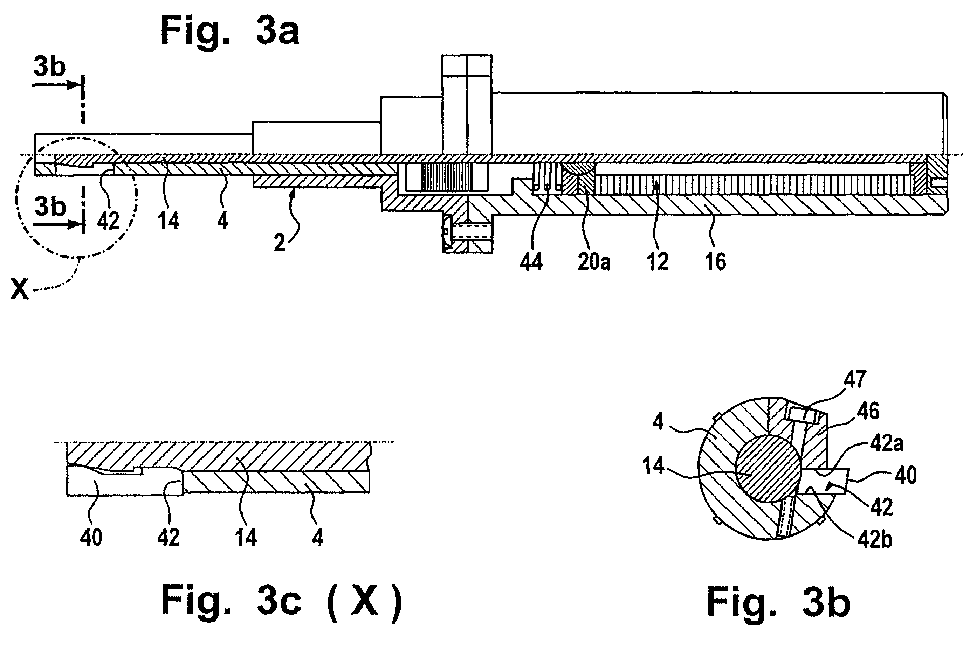

Die Figuren 3a, 3b und 3c zeigen des Weiteren eine dritte Ausführungsform des erfindungsgemäßen Feinstbohrwerkzeugs. In dieser dritten Ausführungsform weist das Feinstbohrwerkzeug nur ein Schneidelement 40 auf, das in einer in den Außenumfang der Bohrstange (4) mündenden Führungsausnehmung 42 an der Bohrstange 4 radial verschiebbar aufgenommen ist und unmittelbar mit dem Verstellelement 14, d.h. mit dem Außenkonus 15 des Verstellelements 14, in Verbindung steht. Wie es insbesondere aus Fig. 3c ersichtlich ist, erfolgt die Arretierung des Schneidelements 40 in einer bestimmten Relativposition zur Bohrstange 4 durch eine Klemmung des Schneidelements 40 unmittelbar in dem Bereich der Bohrstange 4, in dem die Führungsausnehmung vorgesehen ist. Beispielsweise ist eine Flanke 42a der beiden seitlichen Flanken 42a, 42b, die die Führungsausnehmung 42 bilden, an einem relativ zur anderen starren Flanke 42b der Führungsausnehmung 42 bewegbaren Klemmkörper 46 vorgesehen, wobei die Klemmung des Klemmkörpers 46 z.B. mittels einer Schraube 47 erfolgt, wie dies insbesondere aus Fig. 3b ersichtlich ist.

Die Lagerung des Piezo-Aktors 12 sowie das Funktionsprinzip des Feinstbohrwerkzeugs gemäß dieser dritten Ausführungsform entsprechen im wesentlichen der Lagerung bzw. dem Funktionsprinzip des Feinstbohrwerkzeugs gemäß der zweiten Ausführungsform, in der das Verstellelement 14 mittels des Piezo-Aktors 12 gemäß Fig. 2 nach links verschoben wird. Zusätzlich ist in der dritten Ausführungsform jedoch eine Rückstellfeder 44 vorgesehen, die zwischen der Bodenwandung 16a des Gehäuses 16 und der in Fig. 3a linken Lagerschale 20a unter Druck angeordnet ist.

Gemäß den vorstehend beschriebenen Ausführungsformen wird die axiale Verschiebung des Verstellelements 14 über das Keilgetriebe in eine radiale Verstellbewegung der Schneidelemente umgewandelt. Anstelle der vorstehend erläuterten Keilgetriebe-Bauarten sind jedoch auch andere Bauarten bzw. hinsichtlich der Funktionsweise anders geartete geeignete Mechanismen anwendbar, die eine Umwandlung einer axialen Bewegung des Verstellelements 14 in eine radiale Bewegung des bzw. der Schneidelemente erlauben.

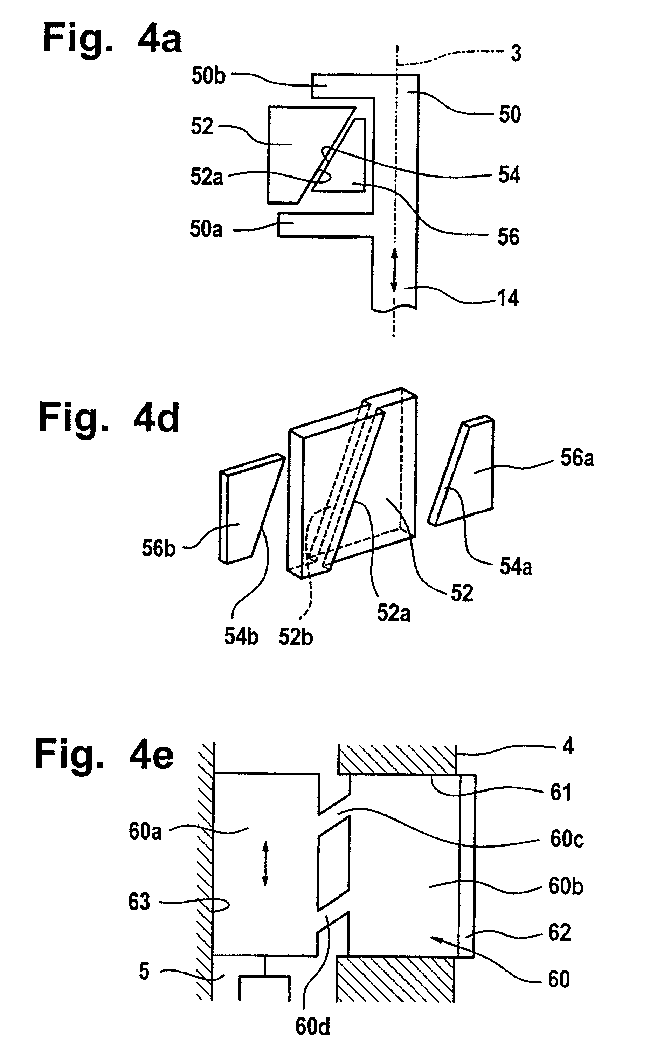

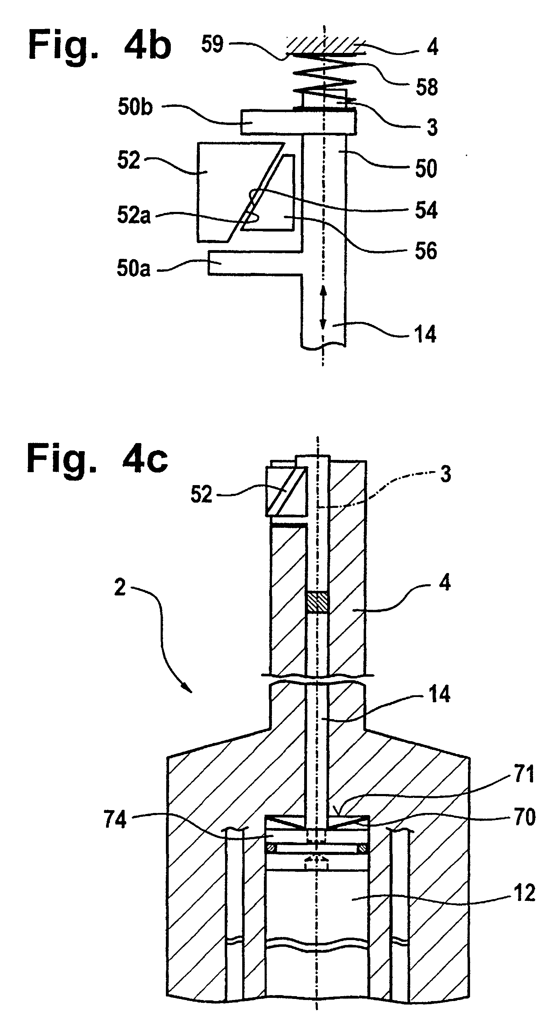

Anwendbar sind z.B. Mechanismen, durch die die Schneidelemente nicht nur radial verstellt werden, sondern eine Bewegung erfahren, die sich aus einem in Bezug auf die Drehachse 3 des Feinstbohrwerkzeugs 2 axialen und radialen Anteil zusammensetzt. Beispielsweise könnten Verstellmechanismen Anwendung finden, wie sie beispielsweise in den Figuren 4a und 4b schematisch dargestellt sind.

Fig. 4a zeigt einen Verstellmechanismus umfassend ein Verstellelement 14, dessen Schneidelement-seitiges Ende einen "gabelförmig" ausgebildeten Endabschnitt 50 aufweist. Zwischen den Klemmbacken 50a und 50b ist ein Schneidelement 52 in Form einer auswechselbaren Schneidplatte unter Formund/oder Kraftschluß aufgenommen. Der gabelförmige Endabschnitt 50 wird im Fall einer Ansteuerung des nicht gezeigten Piezo-Aktors mit dem Verstellelement 14 axial verstellt. Dabei wird die Schneidplatte 52, die an ihrer der Drehachse 3 zugewandten Seite 52a eine beispielsweise durch Abschrägung ausgebildete Schrägfläche aufweist, über eine schiefe Ebene 54 geführt, die an einem Keilkörper 56 vorgesehen ist. Der Keilkörper 56 kann entweder einstückig mit der nicht gezeigten Bohrstange in einer Ausnehmung zur Aufnahme der Schneidplatte 52 ausgebildet oder als ein separates Bauteil auf geeignete Weise in der Schneidplatten-Ausnehmung an der Bohrstange befestigt sein. Wenn die Schneidplatte 52 zusammen mit dem Verstellelement 14 in Fig. 4a relativ zur schiefen Ebene 54 nach unten verschoben wird, vergrößert sich somit der Bohrdurchmesser. Gemäß dem in Fig. 4a gezeigten Verstellmechanismus wird die Schneidplatte 52 somit zugleich radial und axial verstellt. Der axiale Verstellweg der Schneidplatte 52 liegt dabei unter Berücksichtigung der zu erwirkenden Einstellbewegungen in einem so kleinen Bereich von in der Regel unter 100 µm, so daß er bei einer Feinbohrbearbeitung vernachlässigt werden kann. Dieser Verstellmechanismus stellt somit eine kinematische Umkehr zu den Verstellmechanismen der vorstehend beschriebenen Ausführungsformen dar, bei denen nicht das Schneidelement sondern die schiefe Ebene in Form des am Schneidteil vorgesehenen Außenkonus axiale verstellt wird.

Die Klemmung der Schneidplatte 52 erfolgt, wie bereits erwähnt, über den "gabelförmig" ausgebildeten Endabschnitt schnitt 50, der über das Verstellelement 14 mit dem nicht gezeigten Piezo-Aktor in Wirkverbindung steht. Wie in Fig. 4b oder 4c gezeigt, ist der Endabschnitt 50 mit dem Verstellelement 14 vorzugsweise über eine Feder 58 bzw. eine Feder 70 zum Piezo-Aktor 12 hin vorgespannt. Gemäß Fig. 4b kann die Feder 58 zwischen einer an der Bohrstange 4 vorgesehenen Abstützung 59 und der Gabelbacke 50b angeordnet sein. In diesem Fall kann die eine Gabelbacke 50b auf dem Endabschnitt 50 axial verschiebbar angeordnet sein, so daß die Feder 58 zum Einen die Gabelbacken-Verstellelement-Einheit in Richtung hin zum Piezo-Aktor vorspannt und zum Anderen auf die Klemmbacke 50b eine Druckkraft ausübt, wodurch die Schneidplatte 52 zwischen die beiden Klemmbacken 50a und 50b geklemmt wird. Die Steifigkeit der Feder 58 ist vorzugsweise so ausgelegt, daß zum Einen eine stabile und feste Schneidplattenklemmung gewährleistet ist, zum Anderen jedoch die durch den Piezo-Aktor erzeugte Axialkraft noch ausreicht, um entgegen den zwischen den Klemmbacken 50a und 50b und der Schneiplatte 52 auftretenden Reibkräften eine Radialverstellung der Schneidplatte 52 sicherzustellen. Alternativ dazu kann gemäß Fig. 4c das Verstellelement 14 auch über eine zwischen eine Abstützung 71 am Bohrwerkzeug 2 und einen am Verstellelement 14 angebrachten Teller 74 zum Piezo-Aktor 12 hin vorgespannt werden. In Fig. 4c ist der den Teller 74 mit Druck beaufschlagenden Federvorsprung zu erkennen. Die Feder 70 ist hier gerade so steif, daß zum Einen eine stabile und feste Schneidplattenklemmung gewährleistet ist und zum Anderen die vom Piezo-Aktor 12 für die gewünschte Schneidenverstellung erforderliche Kraft noch ausreicht.

Die Schneidplatte 52 kann alternativ zu den vorstehend erläuterten und dargestellten Formen auch so ausgebildet: sein, wie es die Fig. 4d in auseinander gezogener Darstellung schematisch zeigt. Die in Fig. 4d dargestellte Schneidplatte 52 weist im Besonderen zwei gegensinnig vorgesehene Abschrägungen 52a und 52b auf, die jeweils über eine entsprechend zugeordnete schiefe Ebene 54a bzw. 54b geführt werden, die an zwei feststehenden Keilkörpern 56a und 56b vorgesehen sind. Durch diesen Verstellmechanismus gleitet die Schneidplatte 52 radial nach außen, wenn sie mit dem Verstellelement 14 in Fig. 4a relativ zur schiefene Ebene 54a nach unten verschoben wird, wodurch sich der Bohrdurchmesser vergrößert. Wenn die Schneidplatte 52 mit dem Verstellelement 14 in Fig. 4a relativ zur schiefene Ebene 54b nach oben verschoben wird, gleitet die Schneidplatte 52 jedoch radial nach innen, wodurch sich der Bohrdurchmesser verkleinert.

Eine weitere Variante eines Verstellmechanismus ergibt sich aus der in Fig. 4e schematisch dargestellten Parallelogramm-Konstruktion. Hierbei weist die aus einem Stück gefertigte Schneidplatte 60 einen bezüglich der Drehachse des Bohrwerkzeugs radial inneren Plattenabschnitt 60a und einen radial äußeren Plattenabschnitt 60b mit Werkzeugschneide 62 auf, die über parallel angeordnete Stege 60c und 60d miteinander in Verbindung stehen, die als eine Art "Materialgelenk" fungieren. Wenn nun z.B. der Plattenabschnitt 60a mittels des nicht gezeigten Verstellelements bei einer Ansteuerung des Piezo-Aktors relativ zum Plattenabschnitt 60b axial verschoben wird, erfährt der Plattenabschnitt 60b eine Bewegung in Radialrichtung, d.h. j.e nach Richtung der Axialkraft entweder eine Verschiebung radial nach außen oder radial nach innen. Der Plattenabschnitt 60b ist vorzugsweise in einer entsprechenden Ausnehmung 61 an der Bohrstange 4 radial beweglich geführt, während der Plattenabschnitt 60a sich an einer axial verlaufenden Wand, z.B. der Innenwandung 63 des zentralen Innenraums 5 in der Bohrstange 4, in der das Verstellelement 14 angeordnet ist, abstützt und mit dem Verstellelement 14 auf geeignete Weise derart in Wirkverbindung steht, daß er mit diesem bei einer Ansteuerung des Piezo-Aktors eine Axialbewegung erfährt, wodurch über die als Materialgelenk fungierenden Stege 60c und 60d auf den radial beweglich geführten Plattenabschnitt 60b eine in Radialrichtung wirkende Druck- bzw. Zugkraft übertragen wird.

Sofern der Durchmesser des Feinstbohrwerkzeugs und damit die Abmessungen der Schneidplatte 60 es zulassen, könnte die beiden Plattenabschnitte 60a und 60b als voneinander unabhängig gefertigte Bauteile über einen geeigneten Gelenkmechanismus mit Lagern miteinander in Verbindung stehen.

Selbstverständlich lassen sich die Merkmale der vorstehend erläuterten ersten bis dritten Ausführungsformen, insbesondere die Arretier- und Werkzeugschneidenverstellmechanismen, zu verschiedenen weiteren Feinstbohrwerkzeug-Ausführungsformen kombinieren, sofern dies technisch realisierbar ist. Daher sind im Rahmen des durch die Patentansprüche definierten Umfangs weitere Ausführungsformen möglich.

## Patentansprüche

1. Feinstbohrwerkzeug (2) umfassend ein an einer Bohrstange (4) mittels eines Piezo-Aktors (12) verstellbar montiertes Schneidelement sowie einen Arretiermechanismus (10) zum mechanischen Arretieren des piezoelektrisch eingestellten Schneidelements in einer bestimmten Relativposition zur Bohrstange (4), **gekennzeichnet durch** ein in Wirkverbindung zwischen dem Piezo-Aktor (12) und dem Schneidelement verstellbar angeordnetes Verstellelement (14, 18), und **dadurch**, daß
der Arretiermechanismus (10) einen Klemmkörper (10a, 10b) mit zwei, das Verstellelement (14, 18) im wesentlichen vollständig umgreifenden Klemmflügeln sowie eine die Klemmflügel des Klemmkörpers (10a, 10b) durchsetzende Klemmschraube zum Zusammenspannen der Klemmflügel umfaßt.

2. Feinstbohrwerkzeug nach Anspruch 1, **dadurch gekennzeichnet, daß** der Klemmkörper (10, 10b) einen in engen Grenzen elastisch verformbaren Abschnitt (10c) aufweist.

3. Feinstbohrwerkzeug (2) insbesondere nach Anspruch 1, umfassend ein an einer Bohrstange (4) mittels eines Piezo-Aktors (12) verstellbar montiertes Schneidelement, das in einer in den Außenumfang der Bohrstange (4) mündenden Äusnehmung (42) radial verschiebbar aufgenommen ist, sowie einen Arretiermechanismus (10) zum mechanischen Arretieren des piezoelektrisch eingestellten Schneidelements in einer bestimmten Relativposition zur Bohrstange (4), **dadurch gekennzeichnet, daß**
der Arretiermechanismus einen relativ zur Bohrstange (4) bewegbaren Klemmkörper (46) umfaßt, der eine (42a) der beiden, die Ausnehmung (42) bildenden seitlichen Flanken (42a, 42b) definiert.

4. Feinstbohrwerkzeug nach einem der Ansprüche 1 bis 3, **dadurch gekennzeichnet, daß** das Verstellelement (14, 18) Axialrichtung der Bohrstange (4) verstellbar ist.

5. Feinstbohrwerkzeug nach Anspruch 4, **gekennzeichnet durch** ein in Wirkverbindung zwischen dem Verstellelement (14, 18) und dem Schneidelement angeordnetes Getriebe (8, 9, 14, 15) zum Umwandeln der Axialbewegung des Verstellelements (14, 18) in eine Axial- und/oder Radialbewegung des Schneidelements relativ zur Bohrstange (4).

6. Feinstbohrwerkzeug nach Anspruch 5, **dadurch gekennzeichnet, daß** das Schneidelement an der Bohrstange (4) radial verstellbar angeordnet ist und das Getriebe ein Keilgetriebe ist, das eine am Verstellelement (14, 18) vorgesehene Keilfläche (15) umfaßt, die mit dem Schneidelement in Wirkverbindung steht.

7. Feinstbohrwerkzeug nach Anspruch 6, **dadurch gekennzeichnet, daß** das Schneidelement von einem Spreizring (8) als Bestandteil des Keilgetriebes getragen wird.

8. Feinstbohrwerkzeug nach Anspruch 7, **dadurch gekennzeichnet, daß** der Spreizring (8) eine der Keilfläche (15) des Verstellelements (14, 18) zugeordnete Keilfläche (9) umfaßt.

9. Feinstbohrwerkzeug nach einem der Ansprüche 1 bis 8, **dadurch gekennzeichnet, daß** der Arretiermechanismus (10) in die Bohrstange (4) integriert ist.

10. Feinstbohrwerkzeug nach einem der Ansprüche 1 bis 9, **gekennzeichnet durch** einen an der Bohrstange (4) justierbar vorgesehenen Endanschlag (30) zum Festlegen einer bestimmten Endposition des des Schneidelements in Axialrichtung des Bohrwerkzeugs (2).

11. Feinstbohrwerkzeug nach einem der Ansprüche 1 bis 10, **dadurch gekennzeichnet, daß** der piezoelektrische Aktor (12) in einem an die Bohrstange (4) auf Seiten des Arretiermechanismus (10) axial angeflanschten Gehäuse (16) aufgenommen ist.

12. Feinstbohrwerkzeug nach Anspruch 11, **dadurch gekennzeichnet, daß** der piezoelektrische Aktor (12) durch kugelschalenförmige Lagerschalen (20a, 20b) gelagert ist.

13. Feinstbohrwerkzeug nach Anspruch 11 oder 12, **gekennzeichnet durch** ein an der Bohrstange (4) vorgesehenes rotationssymmetrisches Anschlußelement (22, 34) zum Versorgen des piezoelektrischen Aktors (12) mit elektrischer Spannung.

14. Feinstbohrwerkzeug nach einem der Ansprüche 1 bis 13, **dadurch gekennzeichnet, daß** der piezoelektrische Aktor (12) einen Verstellbereich bis 100 µm bei einer Auflösung von kleiner als 0,1 µm und eine Belastbarkeit von mehr als 500 N aufweist.

## Claims

1. Precision boring tool (2) comprising a cutting element, mounted on a boring bar (4) in an adjustable manner by means of a piezoelectric actuator (12), and a locking mechanism (10) for mechanically locking the piezoelectrically set cutting element in a certain position relative to the boring bar (4), **characterized by** an adjusting element (14, 18) adjustably arranged in operative connection between the piezoelectric actuator (12) and the cutting element, and in that the locking mechanism (10) comprises a clamping body (10a, 10b) having two clamping lobes, enclosing the adjusting element (14, 18) essentially completely, and a clamping screw which passes through the clamping lobes of the clamping body (10a, 10b) and is intended for clamping together the clamping lobes.

2. Precision boring tool according to Claim 1, **characterized in that** the clamping body (10a, 10b) has a section (10c) which is elastically deformable within narrow limits.

3. Precision boring tool (2) in particular according to Claim 1, comprising a cutting element, which is mounted on a boring bar (4) in an adjustable manner by means of a piezoelectric actuator (12) and is accommodated in a radially displaceable manner in an aperture (42) opening into the outer circumference of the boring bar (4), and a locking mechanism (10) for mechanically locking the piezoelectrically set cutting element in a certain position relative to the boring bar (4), **characterized in that** the locking mechanism comprises a clamping body (46) which is movable relative to the boring bar (4) and defines one (42a) of the two lateral flanks (42a, 42b) forming the aperture (42).

4. Precision boring tool according to one of Claims 1 to 3, **characterized in that** the adjusting element (14, 18) is adjustable in the axial direction of the boring bar (4).

5. Precision boring tool according to Claim 4, **characterized by** a mechanism (8, 9, 14, 15) which is arranged in operative connection between the adjusting element (14, 18) and the cutting element and is intended for converting the axial movement of the adjusting element (14, 18) into an axial and/or radial movement of the cutting element relative to the boring bar (4).

6. Precision boring tool according to Claim 5, **characterized in that** the cutting element is arranged in a radially adjustable manner on the boring bar (4), and the mechanism is a wedge mechanism which comprises a wedge surface (15) which is provided on the adjusting element (14, 18) and is in operative connection with the cutting element.

7. Precision boring tool according to Claim 6, **characterized in that** the cutting element is carried by an expanding ring (8) as integral part of the wedge mechanism.

8. Precision boring tool according to Claim 7, **characterized in that** the expanding ring (8) comprises a wedge surface (9) assigned to the wedge surface (15) of the adjusting element (14, 18).

9. Precision boring tool according to one of Claims 1 to 8, **characterized in that** the locking mechanism (10) is integrated in the boring bar (4).

10. Precision boring tool according to one of Claims 1 to 9, **characterized by** an end stop (30) which is provided on the boring bar (4) in an adjustable manner and is intended for establishing a certain end position of the cutting element in the axial direction of the boring tool (2).

11. Precision boring tool according to one of claims 1 to 10, **characterized in that** the piezoelectric actuator (12) is accommodated in a housing (16) which is flange-mounted axially on the boring bar (4) on sides of the locking mechanism (10).

12. Precision boring tool according to Claim 11, **characterized in that** the piezoelectric actuator (12) is mounted by ball-socket-shaped bearing shells (20a, 20b).

13. Precision boring tool according to Claim 11 or 12, **characterized by** a rotationally symmetrical connecting element (22, 34) which is provided on the boring bar (4) and is intended for supplying the piezoelectric actuator (12) with a voltage.

14. Precision boring tool according to one of Claims 1 to 13, **characterized in that** the piezoelectric actuator (12) has an adjusting range of up to 100 µm with a resolution of less than 0.1 µm and a loading capacity of more than 500 N.

## Revendications

1. Outil de perçage de superfinition (2) comprenant un élément de coupe monté sur une tige porte-foret (4), réglable au moyen d'un actionneur piézoélectique (12) ainsi qu'un mécanisme d'arrêt (10) pour l'arrêt mécanique de l'élément de coupe à réglage piézoélectrique dans une position relative déterminée par rapport à la tige porte-foret (4), **caractérisé par** un élément de réglage (14,18) disposé de façon réglable en liaison opérante entre l'actionneur piézoélectrique (12) et l'élément de coupe et en ce que le mécanisme d'arrêt (10) comprend un corps de serrage (10a,10b) avec deux ailettes de serrage emprisonnant sensiblement en totalité l'élément de réglage (14,18) ainsi qu'une vis de serrage traversant les ailettes de serrage du corps de serrage (10a,10b) pour le serrage conjoint des ailettes de serrage.

2. Outil de perçage de superfinition selon la revendication 1, **caractérisé en ce que** le corps de serrage (10,10b) présente une section (10c) déformable élastiquement à l'intérieur de limites étroites.

3. Outil de perçage de superfinition (2), en particulier selon la revendication 1, comprenant un élément de coupe monté sur une tige porte-foret (4) de façon réglable au moyen d'un actionneur piézoélectrique (12) qui est logé de façon déplaçable radialement dans un évidement (42) débouchant dans la périphérie extérieure de la tige porte-foret (4), ainsi qu'un mécanisme d'arrêt (10) pour l'arrêt mécanique de l'élément de coupe à réglage piézoélectrique dans une position relative déterminée par rapport à la tige porte-foret (4), **caractérisé en ce que**, le mécanisme d'arrêt comprend un corps de serrage (46) déplaçable par rapport à la tige porte-foret (4) qui définit un des deux flancs latéraux (42a,42b) formant l'évidement (42).

4. Outil de perçage de superfinition selon une des revendications 1 à 3, **caractérisé en ce que** l'élément de réglage (14,18) est réglable dans la direction axiale de la tige porte-foret (4).

5. Outil de perçage de superfinition selon la revendication 4, **caractérisé par** un engrenage (8,9,14,15) disposé en liaison opérante entre l'élément de réglage (14,18) et l'élément de coupe pour convertir le mouvement axial de l'élément de réglage (14,18) en un mouvement axial et/ou radial de l'élément de coupe par rapport à la tige porte-foret (4).

6. Outil de perçage de superfinition selon la revendication 5, **caractérisé en ce que** l'élément de coupe est disposé sur la tige porte-foret (4) de façon radialement réglable et l'engrenage est un engrenage à coin qui comprend une surface de coin (15) prévue sur l'élément de réglage (14,18) qui est en liaison opérante avec l'élément de coupe.

7. Outil de perçage de superfinition selon la revendication 6, **caractérisé en ce que** l'élément de coupe est porté par un anneau d'écartement (8) faisant partie de l'engrenage à coin.

8. Outil de perçage de superfinition selon la revendication 7, **caractérisé en ce que** l'anneau d'écartement (8) comprend une surface de coin (9) affectée à la surface de coin (15) de l'élément de réglage (14,18).

9. Outil de perçage de superfinition selon l'une des revendications 1 à 8, **caractérisé en ce que** le mécanisme d'arrêt (10) est intégré dans la tige porte-foret (4).

10. Outil de perçage de superfinition selon l'une des revendications 1 à 9, **caractérisé par** une butée d'extrémité (30) prévue de façon ajustable sur la tige porte-foret (4) pour la fixation d'une position d'extrémité déterminée de l'élément de coupe dans la direction axiale de l'outil de perçage (2).

11. Outil de perçage de superfinition selon l'une des revendications 1 à 10, **caractérisé en ce que** l'actionneur piézoélectrique (12) est reçu dans un logement (16) bridé axialement à la tige porte-foret (4) sur des côtés du mécanisme d'arrêt (10).

12. Outil de perçage de superfinition selon la revendication 11, **caractérisé en ce que** l'actionneur piézoélectrique (12) est logé dans des coquilles de coussinet (20a,20b) en forme de cuvettes.

13. Outil de perçage de superfinition selon la revendication 11 ou 12, **caractérisé par** un élément de connexion (22,34) symétrique en rotation, prévu sur la tige porte-foret pour l'alimentation en tension électrique de l'actionneur piézoélectrique (12).

14. Outil de perçage de superfinition selon l'une des revendications 1 à 13, **caractérisé en ce que** l'actionneur piézoélectrique (12) présente une plage de réglage jusqu'à 100 µm pour une résolution inférieure à 0,1 µm et une capacité de charge supérieure à 500 N.
